# EUROPEAN PATENT APPLICATION

(11) **EP 3 933 245 A1**
(43) Date of publication of application: **05.01.2022**
(21) Application number: 20762757.1
(22) Date of filing: 26.02.2020
(51) Int. Cl.: F16L 37/092

(54) **PIVOT BRACE TYPE PIPE FITTING**

(30) Priority: 27.02.2019 KR 20190022956; 21.02.2020 KR 20200021666
(71) Applicant: Kim, Suk Yoon, Bupyeong-gu Incheon 21335 (KR)
(72) Inventor: KIM, Yusie, Incheon 21335 (KR); KIM, Suk Yoon, Incheon 21335 (KR)
(74) Representative: Grünecker Patent- und Rechtsanwälte PartG mbB
(86) International application number: PCT/KR2020/002765
(87) International publication number: WO 2020/175919

(57) **Abstract**

The present disclosure provides a pivot brace type pipe fitting, including: a body accommodating an entering pipe, and having a pivot corner having an inverted L-shaped cross section in an annular space surrounding a circumferential surface of the pipe; a plurality of pivot braces which are separated from an inside of the body and include a body adhesion unit in contact with the pivot corner and a pipe adhesion unit in contact with the pipe; and a pivot actuating member having a tightening strap surrounding the pivot brace and an actuator tightening the tightening strap, and bringing the pipe adhesion unit into close contact with the pipe by using the body adhesion unit as a pivot axis and pivoting the pivot brace.

## Description

### BACKGROUND

### 1. Technical Field

The present disclosure relates to a pivot brace type pipe fitting, and more particularly, to a pivot brace type pipe fitting capable of easily and securely connecting pipes.

### 2. Description of Related Art

Various technologies such as welding, screw coupling, and flange coupling are used to connect pipes carrying a fluid such as water, and recently, research into a method for easily connecting pipes through a simple connecting device is being conducted.

As a representative example of the related art, a pivot brace type pipe fitting according to the related art is disclosed in Korean Patent Application No. 10-2016-0082923.

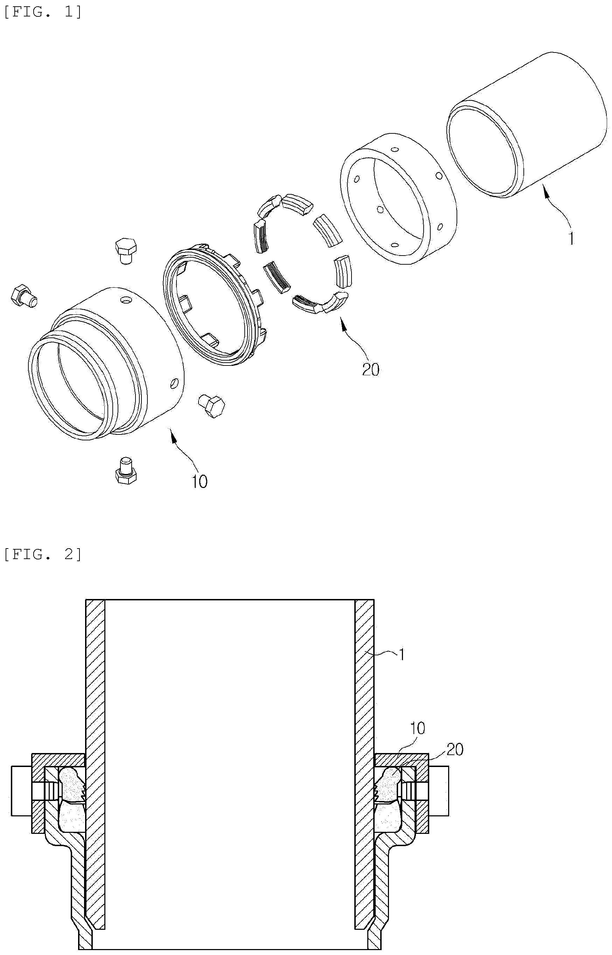

FIG. 1 is a schematic exploded perspective view illustrating a pivot brace type pipe fitting according to the related art. FIG. 2 is a schematic cross-sectional view in the width direction illustrating the coupled appearance of FIG. 1.

As can be seen from FIGS. 1 and 2, the pivot brace type pipe fitting according to the related art is a one-touch connection technology in which connection work is completed with an operation of inserting a pipe 1, and includes a body 10 for accommodating the pipe 1 and a pivot brace 20 for fixing the pipe 1.

The pivot brace type pipe fitting according to the related art has the advantage of being easy to use because the pipe 1 is connected by the pivot brace 20 once the pipe 1 is inserted into the body 10.

In other words, the pressure of a fluid applied to an inside of the pipe 1 creates force separating the pipes in the longitudinal direction of the pipe 1. The pipes 1 coupled by a pivot brace 20 that pivots and fixes the pipe 1 according to the related art can be stably maintained in a coupled state without being separated.

However, in the related art, in order to increase frictional force between the pipe 1 and the pivot brace 20 when the pipe 1 is inserted, as the force applied to the pivot brace 20 increases, resistance also increases when the pipe 1 is inserted. Hence, it is difficult to connect the pipe 1, and there is a drawback in that the external scratches of the pipe 1 also become bigger.

In addition, since the contact area between the pivot brace 20 and the pipe 1 is small, frictional force cannot be increased after the pipe 1 is inserted. Hence, there is a drawback in that the pipe 1 may be unintentionally separated when rotated in the circumferential direction while applying force in the opposite direction when the inserted pipe 1 is coupled. In order to increase the frictional force between the pivot brace 20 and the pipe 10, the resistance at the time at which the pipe 1 is inserted also increases when the force applied to the pivot brace 20 increases. Hence, it is difficult to insert the pipe 1, and scratches are more commonly generated on the surface of the pipe 1 during an insertion process.

In addition, when the maintenance and repair work of a pipe is performed after the pipe 1 is connected, in order to separate the pipe 1, it is inconvenient to disassemble a pipe connecting device and remove the pivot brace 20.

In addition, there is a drawback in that when the bore of the pipe 1 increases, a space for accommodating the tooth of the pivot brace 20 and a size of the pivot brace 20 that is increased in proportion to the cross-sectional area of the pipe 1 needs to be provided in a connecting device.

### SUMMARY

A technical task of the present disclosure is to provide a pivot brace type pipe fitting capable of preventing scratches on the surface of a pipe when pipes are connected and controlling the frictional force between the pivot brace and the pipe, thereby preventing a phenomenon of a pipe falling-out and increasing stability and reliability.

In addition, an aspect of the present disclosure is directed to providing a pivot brace type pipe fitting that is convenient for maintenance and repair since a pipe can be conveniently separated in the case of carrying out maintenance and repair work on a pipe.

In addition, an aspect of the present disclosure is directed to providing a pivot brace type pipe fitting capable of saving accommodation space of the pivot brace according to the change in bore of the pipe.

The pivot brace type pipe fitting according to an embodiment of the present disclosure includes: a body accommodating an entering pipe, and having a pivot corner having an inverted L-shaped cross section in an annular space surrounding a circumferential surface of the pipe; a plurality of pivot braces which are separated from an inside of the body and include a body adhesion unit in contact with the pivot corner and a pipe adhesion unit in contact with the pipe; and a pivot actuating member having a tightening strap surrounding the pivot brace and an actuator tightening the tightening strap, and bringing the pipe adhesion unit into close contact with the pipe by using the body adhesion unit as a pivot axis and pivoting the pivot brace.

The body adhesion unit may be formed in an arc shape in cross section to pivot in contact with the pivot corner, and the pipe adhesion unit may be formed to have a tooth shape to be in close contact with the pipe.

The tightening strap may be formed of a plate-shaped spring material or a polymer.

The tightening strap may be coupled to the body in an open circular shape, and the actuator may be tightened by moving a distal end of the tightening strap.

The actuator may include a guide bolt positioned on a moving line of a distal end of the tightening strap and fixed to the body; a compression coil spring coupled to the guide bolt and coupled to the distal end of the tightening strap; and a nut moving along the guide bolt and moving the distal end of the tightening strap.

The actuator may be formed of a spur gear formed at one end of a distal end of the tightening strap, and rotates in engagement and tightens the tightening strap.

The tightening strap may be coupled to the body in a closed circular form, and the actuator may be tightened by forming a curve in a predetermined area of the tightening strap.

The device may further include a tightening strap support pillar in contact with an inner surface of the tightening strap having a predetermined area and aids a curve formed by the actuator in the tightening strap.

The actuator may include a Ω-shaped clip.

The actuator may include a bolt and a compression spring directed toward an inside of the body, and the bolt and the compression spring may push a predetermined area of the tightening strap toward the inside of the body.

The body, while being fastened to the body, may include a brace ring having a square C-shaped cross section, and the pivot corner may be provided on the brace ring.

The brace ring may be installed on the body by overlapping upwardly and downwardly in a plural number.

The device may further include a pivot brace detaching prevention member for preventing the pivot brace from being detached.

The pivot brace detaching prevention member may include a protrusion formed to protrude from both sides of the pivot brace and having a straight cross section, and a brace assembly strap that engages with a straight cross section of the protrusion to prevent the pivot brace from being detached.

In addition to the technical tasks of the present disclosure mentioned above, other features and advantages of the present disclosure will be described below, or will be clearly understood by those skilled in the art from such description and explanation.

According to the present disclosure as described above, there are the following advantages.

According to the present disclosure, by increasing the frictional force with the pipe by pressing the pivot brace through a pivot actuating member as much as necessary after the insertion of the pipe is completed, it is possible to prevent the pipe from being undesirably separated, thereby increasing stability and reliability of the pipe.

The present disclosure does not require an elastic member for supporting the pivot brace during a pipe insertion process, so there is no resistance of the elastic member. Hence, it is easy to insert the pipe, and scratches on the surface of the pipe in contact with the elastic member can also be prevented.

According to an embodiment of the present disclosure, when the pipe maintenance and repair work of a pipe is performed after the pipe is connected, maintenance and repair work can be easily performed by simply removing the tightening strap of the pivot actuating member to separate the pipe.

According to an embodiment of the present disclosure, there is no need to make the size of a pivot brace big in proportion to the cross-sectional area of the pipe by embedding the pivot brace in a square C-shaped brace ring for plumbing construction of large-bore pipes, or to provide separate space for accommodating the pivot brace inside the body.

In addition, other features and advantages of the present disclosure may be newly recognized through embodiments of the present disclosure.

### BRIEF DESCRIPTION OF THE DRAWINGS

FIG. 1 is a schematic exploded perspective view illustrating a pivot brace type pipe fitting according to the related art.
FIG. 2 is a schematic cross-sectional view in the width direction illustrating the coupled appearance of FIG. 1.
FIG. 3 is a schematic exploded perspective view illustrating a pivot brace type pipe fitting according to an embodiment of the present disclosure.
FIG. 4 is a schematic longitudinal cross-sectional view of a pivot brace type pipe fitting before a pivot actuating member is actuated according to an embodiment of the present disclosure.
FIG. 5 is a schematic longitudinal cross-sectional view of a pivot brace type pipe fitting after a pivot actuating member is actuated according to an embodiment of the present disclosure.
FIG. 6 is a schematic cross-sectional view in the width direction of a pivot brace type pipe fitting illustrating an actuator according to an embodiment of the present disclosure.
FIG. 7 is a schematic cross-sectional view in the width direction of a pivot brace type pipe fitting illustrating an actuator according to another embodiment of the present disclosure.
FIG. 8 is a schematic cross-sectional view in the width direction of a pivot brace type pipe fitting illustrating an actuator according to another embodiment of the present disclosure.
FIG. 9 is a schematic longitudinal cross-sectional view of a pivot brace type pipe fitting in which a brace ring is overlapped and built-in according to another embodiment of the present disclosure.
FIG. 10 is a schematic exploded perspective view illustrating a pivot brace type pipe fitting according to another embodiment of the present disclosure.
FIG. 11 is a schematic perspective view illustrating a pivot brace detaching prevention member according to an embodiment of the present disclosure.

### DETAILED DESCRIPTION

In the present specification, in adding reference numerals for elements in each drawing, it should be noted that like reference numerals already used to denote like elements in other drawings are used for elements wherever possible.

The terms described in the present specification should be understood as follows.

The singular forms are intended to include the plural forms as well, unless the context clearly indicates otherwise, and the scope of right should not be limited by these terms.

It should be understood that the terms "comprise" or "have" do not preclude the presence or addition of one or more other features, integers, steps, operations, components, elements, or combinations thereof.

Hereinafter, preferred embodiments of the present disclosure designed to solve the tasks will be described in detail with reference to the accompanying drawings.

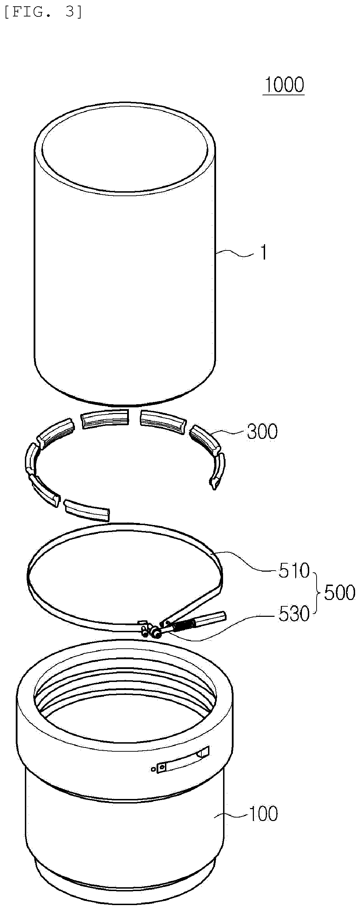

Hereinafter, a pivot brace type pipe fitting according to an embodiment of the present disclosure will be described with reference to FIGS. 3 to 5.

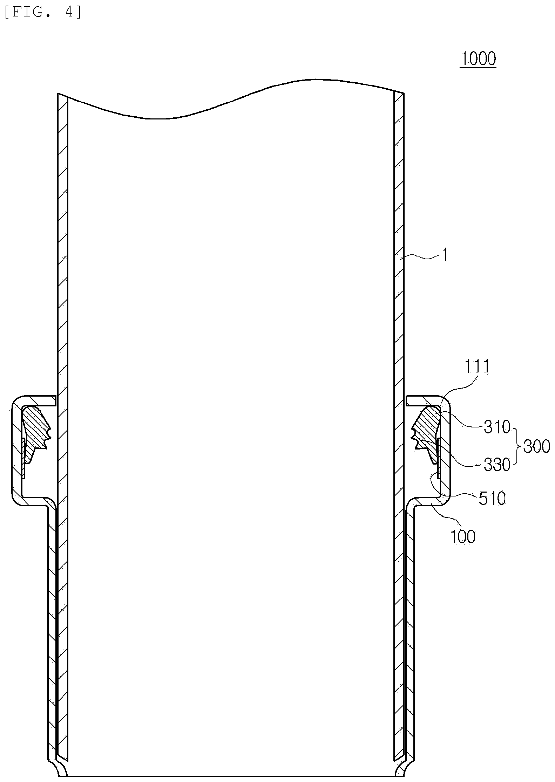

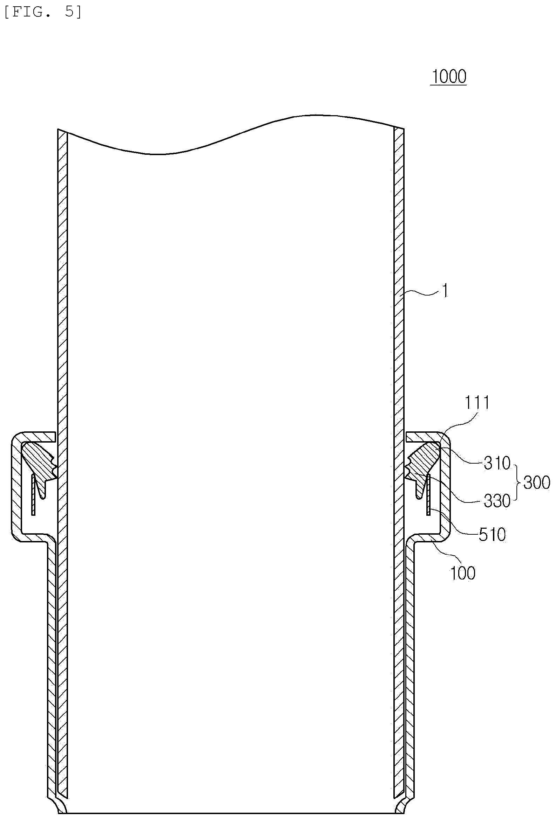

FIG. 3 is a schematic exploded perspective view illustrating a pivot brace type pipe fitting according to an embodiment of the present disclosure. FIG. 4 is a schematic longitudinal cross-sectional view of a pivot brace type pipe fitting before a pivot actuating member is actuated according to an embodiment of the present disclosure. FIG. 5 is a schematic longitudinal cross-sectional view of a pivot brace type pipe fitting after a pivot actuating member is actuated according to an embodiment of the present disclosure.

Referring to FIGS. 3 to 5, the pivot brace type pipe fitting 1000 according to an embodiment of the present disclosure includes a body 100, a pivot brace 300, and a pivot actuating member 500.

The body 100 may be provided with a pivot corner 111 having an inverted L-shaped cross section in an annular space surrounding the circumferential surface of the pipe 1 while accommodating the entering pipe 1.

The angle between the two surfaces of the pivot corner 111 is preferably formed at 90 degrees, but may be formed with a slight angle change.

In addition, the corner portion of the pivot corner 111 may be formed in an arc-shaped round.

The pivot brace 300 may be separated from an inside of the body 100 to fix the pipe 1 entered and positioned in a plurality of locations.

The pivot brace 300 may include a body adhesion unit 310 in contact with the pivot corner 111 and a pipe adhesion unit 330 in contact with the pipe 1.

The body adhesion unit 310 may be formed to have an arc shape in cross section to pivot in contact with the pivot corner.

In other words, when the pipe 1 is inserted, the body adhesion unit 310 pivots through the pivot corner 111 in the form of an inverted L-shaped arc provided on the body 100, thereby facilitating the insertion of the pipe 1.

There may be no issues with stability when the arc-shaped round of the body adhesion unit 310 is formed to be larger than the arc-shaped round of the pivot corner 111.

The pipe adhesion unit 330 may be formed to have a tooth shape to closely fix the pipe 1 inserted into the body 1.

In order to facilitate the insertion of the pipe 1 and to make the inserted pipe 1 easily inseparable, the pipe adhesion unit 330 may be formed in such a manner that the direction of the tooth has an inclination in the insertion direction of the pipe 1.

In addition, on a cross section, the shape of connecting the end of the tooth is formed in an arc shape in which the distance from the pivot center axis of the body adhesion unit 310 to the end of the tooth is gradually increased, thereby accommodating tolerances of the pipe 1. When the pipe 1 is about to fall out, the pivot brace 300 may pivot and dig into the pipe 1 sequentially from the tooth in contact with the pipe 1.

The pivot actuating member 500 may pivot the pivot brace 300 using the body adhesion unit 310 as a pivot axis, so that the pipe adhesion unit 330 may be in close contact with the pipe 1.

The pivot actuating member 500 may include a tightening strap 510 surrounding the pivot brace 300 and an actuator 530 tightening the tightening strap 510.

As can be seen from FIGS. 4 and 5, when the pipe 1 is inserted into the body 100, the pivot brace 300 may be forcibly adhered to the pipe 10 using the tightening strap 510, and the pipe 1 may be fixed by tightening the tightening strap 510 using the actuator 530.

Since the line between the tooth and the pivot axis of the pivot brace 300 is the shortest distance, the more the inserted pipe 1 is separated, the more the tooth dig into the pipe 1 and are not easily separated.

The tightening strap 510 may be formed of a plate-shaped spring material or may be formed of a polymer. In addition, various materials that can be formed in a circular shape while surrounding the pivot brace 300 depending on the material of the pipe 1 to be connected are available.

For example, the tightening strap 50 may be formed using a material such as a rubber material or a belt, which is a polymer composite having elasticity.

In addition, when the pipe 1 is made of a metal material, various materials such as a plate-shaped spring material and a spring steel wire may be applied, and a material in which a metal and a polymer are combined may also be suitable. In order to strengthen the elastic function of the tightening strap 510 of the plate-shaped spring material, wrinkles may be added to the tightening strap 510, and a method of connecting the tightening strap 510 with the spring may also be useful.

The elastic function of the tightening strap 510 may protect the tightening strap 510 from excessive force that may occur when pulled, and may contribute to extending pipe life by absorbing pipe vibration.

Since the tightening strap 510 is installed along the circumferential surface, it has a circular strap shape and may be designed to tighten both an open circular shape or a closed circular form.

The actuator 530 may move the distal end of the tightening strap 510 to tighten the tightening strap 510.

The actuator 530 may pull or wind the distal end of the open circular-shaped tightening strap 510, and may perform a tightening work by pulling a predetermined area of the closed circular-shaped tightening strap 510 outwards of the body 100 or pushing the same inwards.

As such, the pivot brace type pipe fitting 1000 according to an embodiment of the present disclosure is configured to increase the frictional force with the pipe by pressing the pivot brace 300 through the pivot actuating member 500 as much as necessary after the insertion of the pipe 1 is completed, and thus it is possible to prevent the pipe 1 from being undesirably separated, thereby increasing stability and reliability of the pipe.

In addition, the pivot brace type pipe fitting 1000 according to an embodiment of the present disclosure is configured such that when the maintenance and repair work of a pipe is performed after the pipe 1 is connected, the maintenance and repair work of a pipe can be easily performed by simply removing the tightening strap 510 of the pivot actuating member 500 to separate the pipe.

In addition, the pivot brace type pipe fitting 1000 according to an embodiment of the present disclosure does not require an elastic member according to the related art for supporting the pivot brace during a pipe insertion process, so there is no resistance of the elastic member. Hence, it is easy to insert the pipe 1, and scratches on the surface of the pipe in contact with the elastic member can also be prevented.

In addition, in the pivot brace type pipe fitting 1000 according to an embodiment of the present disclosure, when the pipe needs to be removed for maintenance and repair work of a pipe, the pipe 1 can be drawn by returning the pivot actuating member 500 to its original position or removing the tightening strap 510 from the outside. Hence, there is an advantage in that there is no need to separately remove the pivot brace 300.

Hereinafter, redundant descriptions of repeated parts in the structure and material of each configuration will be omitted.

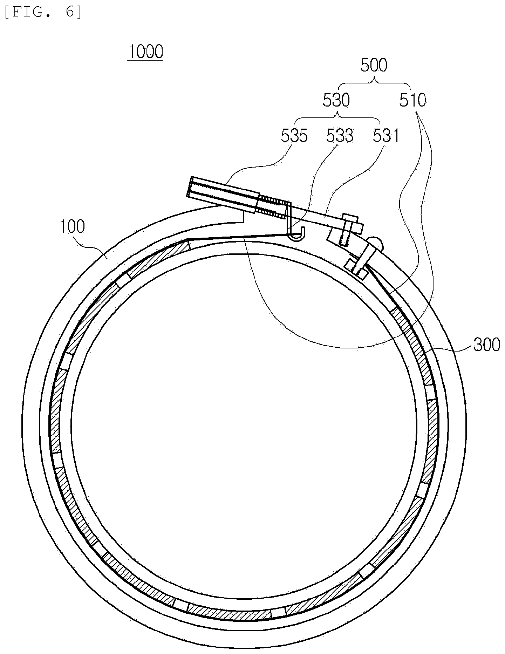

FIG. 6 is a schematic cross-sectional view in the width direction of a pivot brace type pipe fitting illustrating an actuator according to an embodiment of the present disclosure.

Referring to FIG. 6, the actuator 530 according to an embodiment of the present disclosure may include a guide bolt 531, a compression coil spring 533, and a nut 535.

The actuator 530 according to an embodiment of the present disclosure may fix one side of the tightening strap 510 installed in an open circular shape, and tighten the tightening strap 510 while pushing the other side in the moving direction from behind.

The guide bolt 531 fixed to the body 100 is installed on the movement line on which the distal end of the tightening strap 510 moves, and the distal end of the tightening strap 510 is pushed with the nut 535. When a compression coil spring is installed between the distal ends of the tightening strap 510 and the nut 535, elasticity may be added.

One end of the compression coil spring 533 fitted to the guide bolt 531 may be extended and formed in the form of a hook. The hook is coupled with a hole formed at the distal end of the tightening strap 510, whereby the compression coil spring 533 and the tightening strap 510 may be connected.

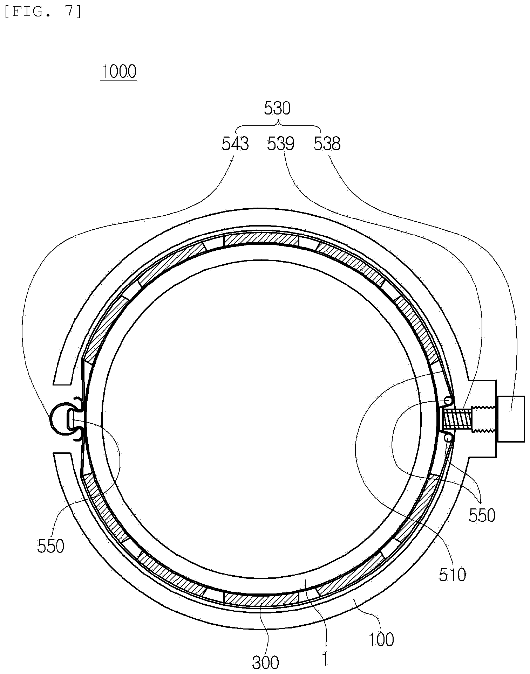

FIG. 7 is a schematic cross-sectional view in the width direction of a pivot brace type pipe fitting illustrating an actuator according to another embodiment of the present disclosure.

Referring to FIG. 7, the actuator 530 according to another embodiment of the present disclosure may be formed by including any one or more of a clip 543, a bolt 538, and a compression spring 539.

The tightening strap 510 may be coupled to the body 100 in a closed circular form, and the actuator 530 may be tightened by forming a curve in a predetermined area of the tightening strap 510. This method is suitable for tightening the tightening strap 510 including a flexible polymer material.

When tightened by forming a curve in a predetermined area of the tightening strap 510, the pivot brace type pipe fitting 100 according to an embodiment of the present disclosure may further include a tightening strap support pillar 510.

While being fixed to the body 100, the tightening strap support pillar 510 may be in contact with an inner surface of the tightening strap having a predetermined area 510 and aid the curve formed by the actuator 530 in the tightening strap 510.

When tightened by forming a curve in the tightening strap 510, a predetermined area of the tightening strap 510 may be tightened by pinching the clip 543 to form a curve.

As an example, the actuator 530 may be in the form of an Ω-shaped clip.

The Ω-shaped clip 543 may be tightened by retracting a predetermined area of the tightening strap 510 while enclosing the tightening strap support pillar 510, so that an elastic function may also be added.

In another embodiment, by using the bolt 538 as the actuator 530, a predetermined area of the tightening strap 510 is pushed to form a valley shape to tighten the tightening strap 510.

For example, the actuator 530 may be formed to include the bolt 538 and the compression spring 539 facing inward of the body 100.

The tightening strap 510 installed in a closed circular form may be tightened by pushing the tightening strap 510 in the inner direction of the body 100 using the bolt 538. Elasticity may be given by installing the compression spring 539 between the bolt 538 and the tightening strap 510.

By installing two tightening strap support pillars 510 with a predetermined separation distance inside the tightening strap 510, when the tightening strap 510 portion between the two tightening strap support pillars 510 is pressed with the bolt 538 and the compression spring 539, the formed valley deepens, thereby maximizing the tightening amount.

In the case of using the actuator 530 for tightening the closed circular tightening strap 510, even when the tightening strap support pillar 510 is installed, the distance between an outer diameter of the pipe 1 and the tightening strap 510 is close, and thus there may be cases where the tightening amount is insufficient just by pressing one point.

In this case, it is preferable to provide another tightening portion at a symmetrical point around the pipe 1.

As can be seen from FIG. 7, in the case of using the tightening strap 510 in a closed circular form, the tightening amount can be maximized by using all of the clip 543, the bolt 538, and the compression spring 539 as the actuator 530.

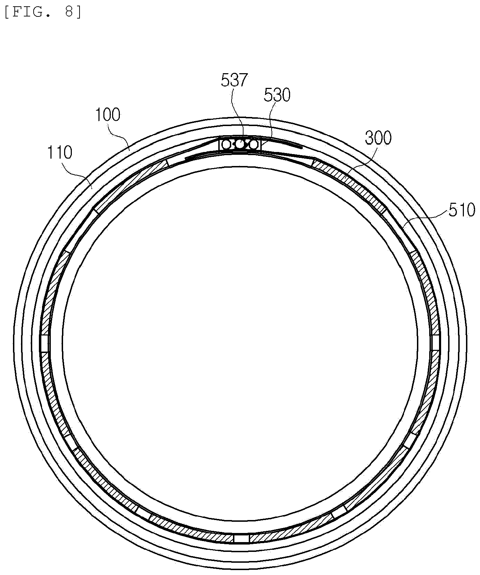

FIG. 8 is a schematic cross-sectional view in the width direction of a pivot brace type pipe fitting illustrating an actuator according to another embodiment of the present disclosure. Except for the change of the actuator 530 and the inclusion of the brace ring 110, the description is the same as described above. Accordingly, the same reference numerals are used to denote the same configurations, and repeated descriptions of the same configurations are omitted. In addition, a brace ring 110 included in the drawing will be described later.

Referring to FIG. 8, various types of gears 537 such as spur gears or worm gears may be used as the actuator 530 according to another embodiment of the present disclosure.

When the tightening strap 510 is coupled to the body 100 in an open circular shape, the actuator 530 according to another embodiment of the present disclosure may use a spur gear 537 formed at one end of the distal end of the tightening strap 510, and rotates in engagement and tightens the tightening strap 510.

Although not shown, when using the spur gear 537 as the actuator 530, it is preferable to install a stopper so that the spur gear 537 does not loosen.

In addition, when wrinkles are added to the tightening strap 510, they help to strengthen the elasticity of the tightening strap 510.

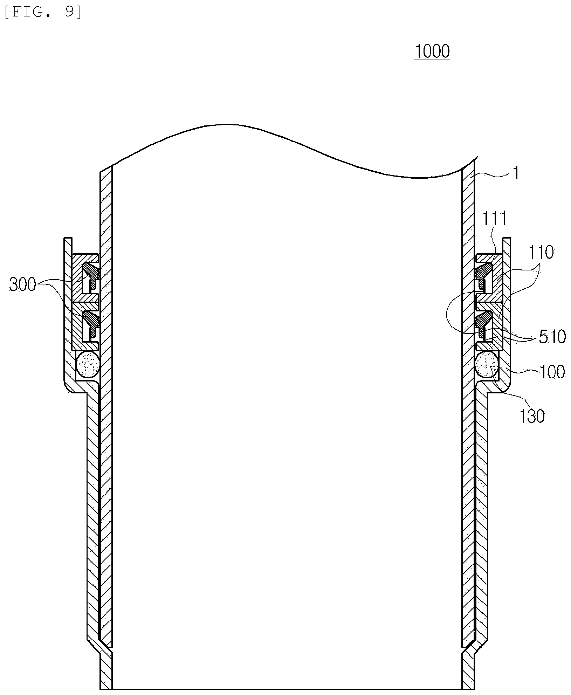

FIG. 9 is a schematic longitudinal cross-sectional view of a pivot brace type pipe fitting in which a brace ring is overlapped and built-in according to another embodiment of the present disclosure. Except that the structure of the body 100 and an O-ring 130 are added, the description is the same as the content described with reference to FIGS. 3 to 5. Accordingly, the same reference numerals are used to denote the same configurations, and repeated descriptions of the same configurations are omitted.

Referring to FIG. 9, the pivot brace type pipe fitting 1000 according to another embodiment of the present disclosure may include the brace ring 110 coupled to the body 100.

The brace ring 110 may be fastened to the body 100 as a square C-shaped ring in cross section.

The brace ring 110 may be installed on the body 100 by overlapping upwardly and downwardly in a plural number.

The pivot corner 111 according to an embodiment of the present disclosure described in FIGS. 3 to 5 is formed on the body 100, but the pivot corner 111 according to another embodiment of the present disclosure may be provided on the brace ring 110.

The pivot brace type pipe fitting 1000 according to another embodiment of the present disclosure includes the brace ring 110 installed on the body 100 by overlapping upwardly and downwardly in a plural number, and thus may be applied to a large-bore high-pressure pipe 1 which has to withstand a large pressure applied due to its large diameter.

In other words, according to the pivot brace type pipe fitting 1000 according to another embodiment of the present disclosure, there is no need to make the size of a pivot brace big in proportion to the cross-sectional area of the pipe by embedding the pivot brace in a square C-shaped brace ring for plumbing construction of large-bore pipes, or to provide separate space for accommodating the pivot brace inside the body.

In addition, the pivot brace type pipe fitting 1000 according to another embodiment of the present disclosure may further include the O-ring 130 fastened to the body 100.

By fastening the O-ring 130 to the inside of the body 100, several inlets into which the pipe 1 is inserted may be configured in one body 100, so that the O-ring 130 may be used in various pipe connecting devices such as elbows and tees.

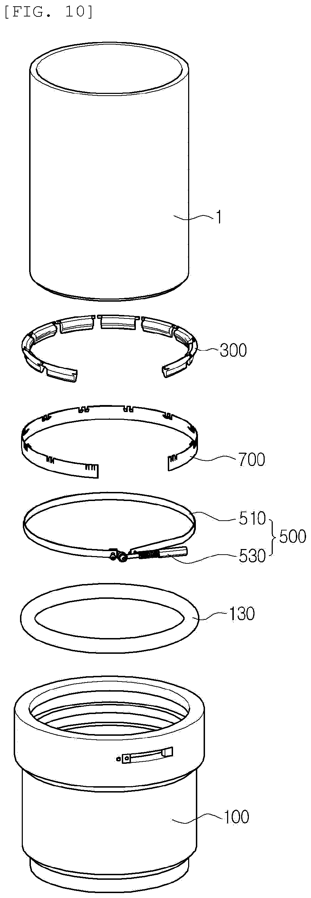

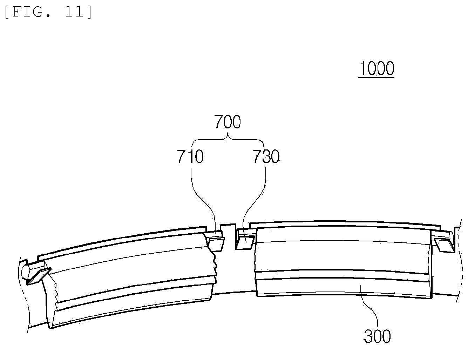

Hereinafter, with reference to FIGS. 10 and 11, a pivot brace type pipe fitting to which a pivot brace detaching prevention member is applied will be described.

FIG. 10 is a schematic exploded perspective view illustrating a pivot brace type pipe fitting according to another embodiment of the present disclosure. FIG. 11 is a schematic perspective view illustrating a pivot brace detaching prevention member 700 according to an embodiment of the present disclosure. Except that the pivot brace detaching prevention member is added, the description is the same as the content described with reference to FIGS. 3 to 5. Accordingly, the same reference numerals are used to denote the same configurations, and repeated descriptions of the same configurations are omitted.

Referring to FIG. 10, the pivot brace type pipe fitting 1000 according to another embodiment of the present disclosure may include the pivot brace detaching prevention member 700.

A plurality of pivot braces 300 are fastened to the inside of the body 100 in the form of a round strap, and the pivot brace detaching prevention member 700 is fastened to the pivot brace 300 so it is possible to prevent the pivot brace 300 from being detached from the body 100.

Referring to FIG. 11, the pivot brace detaching prevention member 700 according to an embodiment of the present disclosure may include a protrusion 710 and a brace assembly strap 730.

The protrusion 710 may be formed to protrude from both sides of the pivot brace 300, and to have a straight cross section.

The brace assembly strap 730 is assembled by being engaged with a straight cross section of the protrusion 710, thereby restraining the protrusion 710 to prevent the pivot brace 300 from being detached.

In other words, the pivot brace detaching prevention member 730 includes the protrusion 710 formed on the side of the body adhesion unit 310 of the pivot brace 300 and the brace assembly strap 730 that is a plate surrounding the same. Since the brace assembly strap 730 is fixed to the protrusion 710, it is possible to prevent the pivot brace 300 from being detached.

While the above-described present disclosure has been described with reference to the exemplary embodiments and the accompanying drawings, it will be apparent to those skilled in the technical field to which the present disclosure pertains that various substitutions, modifications, and changes may be made without departing from the technical spirit and scope of the present disclosure.

## Claims

1. A pivot brace type pipe fitting, comprising:
a body accommodating an entering pipe, and having a pivot corner having an inverted L-shaped cross section in an annular space surrounding a circumferential surface of the pipe;
a plurality of pivot braces which are separated from an inside of the body and include a body adhesion unit in contact with the pivot corner and a pipe adhesion unit in contact with the pipe; and
a pivot actuating member having a tightening strap surrounding the pivot brace and an actuator tightening the tightening strap, and bringing the pipe adhesion unit into close contact with the pipe by using the body adhesion unit as a pivot axis and pivoting the pivot brace.

2. The device of claim 1, wherein the body adhesion unit is formed in an arc shape in cross section to pivot in contact with the pivot corner, and the pipe adhesion unit is formed to have a tooth shape to be in close contact with the pipe.

3. The device of claim 1, wherein the tightening strap is formed of a plate-shaped spring material or a polymer.

4. The device of claim 1, wherein the tightening strap is coupled to the body in an open circular shape, and the actuator is tightened by moving a distal end of the tightening strap.

5. The device of claim 1, wherein the actuator comprises:
a guide bolt positioned on a moving line of a distal end of the tightening strap and fixed to the body;
a compression coil spring coupled to the guide bolt and coupled to the distal end of the tightening strap; and
a nut moving along the guide bolt and moving the distal end of the tightening strap.

6. The device of claim 1, wherein the actuator is formed of a spur gear formed at one end of a distal end of the tightening strap, and rotates in engagement and tightens the tightening strap.

7. The device of claim 1, wherein the tightening strap is coupled to the body in a closed circular form, and the actuator is tightened by forming a curve in a predetermined area of the tightening strap.

8. The device of claim 7, further comprising a tightening strap support pillar that is fixed to the body and is in contact with an inner surface of the tightening strap having a predetermined area and aids a curve formed by the actuator in the tightening strap.

9. The device of claim 7, wherein the actuator comprises a Ω-shaped clip.

10. The device of claim 7, wherein the actuator comprises a bolt and a compression spring directed toward an inside of the body, and the bolt and the compression spring push a predetermined area of the tightening strap toward the inside of the body.

11. The device of claim 1, wherein the body, while being fastened to the body, comprises a brace ring having a square C-shaped cross section, and the pivot corner is provided on the brace ring.

12. The device of claim 11, wherein the brace ring is installed on the body by overlapping upwardly and downwardly in a plural number.

13. The device of claim 1, further comprising a pivot brace detaching prevention member for preventing the pivot brace from being detached.

14. The device of claim 13, wherein the pivot brace detaching prevention member comprises:
a protrusion formed to protrude from both sides of the pivot brace and having a straight cross section; and
a brace assembly strap that engages with a straight cross section of the protrusion to prevent the pivot brace from being detached.
